(19) Europäisches Patentamt / European Patent Office / Office européen des brevets

(11) **EP 4 738 180 A1**

(12) **EUROPEAN PATENT APPLICATION**
published in accordance with Art. 153(4) EPC

(43) Date of publication:
**06.05.2026 Bulletin 2026/19**

(21) Application number: **24830354.7**

(22) Date of filing: **29.05.2024**

(51) International Patent Classification (IPC):
**G06F 30/398** (2020.01)    **G06F 119/06** (2020.01)

(52) Cooperative Patent Classification (CPC):
**G06F 30/398;** G06F 2119/06; Y02D 10/00

(86) International application number:
**PCT/CN2024/095911**

(87) International publication number:
**WO 2025/001707 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.06.2023 CN 202310773235**

(71) Applicant: **Phlexing Technology Co.,Ltd**
**Hangzhou, Zhejiang 310051 (CN)**

(72) Inventor: **ZHANG, Runjie**
**Hangzhou, Zhejiang 310051 (CN)**

(74) Representative: **Metida**
**Gyneju str. 16**
**01109 Vilnius (LT)**

(54) **CHIP POWER CONSUMPTION EVALUATION METHOD, POWER CONSUMPTION MODEL GENERATION METHOD, AND COMPUTER DEVICE**

(57)    The present application relates to a chip power consumption evaluation method, a power consumption model generation method, and a computer device. The chip power consumption evaluation method comprises : determining a static modeling parameter and a dynamic evaluation parameter of a chip under test, wherein the static modeling parameter describes a constant chip design parameter in a power consumption constraint condition of a current power consumption scenario, and the dynamic evaluation parameter is a varying chip design parameter in the power consumption constraint condition of the current power consumption scenario; performing calculation on the basis of the static modeling parameter and a first mapping relationship to obtain an intermediate calculation result, and generating a target power consumption model which stores the intermediate calculation result, wherein the first mapping relationship is at least used for indicating the correspondence between the static modeling parameter and the intermediate calculation result; and obtaining a power consumption evaluation result on the basis of the dynamic evaluation parameter and the target power consumption model. By means of the present application, the problem of low efficiency of the chip power consumption evaluation method is solved, and an efficient and accurate chip power consumption evaluation method is achieved.

determining a static modeling parameter and a dynamic evaluation parameter of a chip under tested; wherein the static modeling parameter is an unvarying chip design parameter in a power consumption constraint of a current power consumption scenario, and the dynamic evaluation parameter is a varying chip design parameter in the power consumption constraint of the current power consumption scenario — S210

calculating an intermediate calculation result based on the static modeling parameter and a first mapping relationship, and generating a target power consumption model that stores the intermediate calculation result; wherein the first mapping relationship is used to indicate a correspondence between the static modeling parameter in the power consumption constraints and the intermediate calculation result — S220

obtaining a power consumption evaluation result based on the dynamic evaluation parameter and the target power consumption model — S230

FIG. 2

**Description**

**CROSS-REFERENCE TO RELATED APPLICATIONS**

This application claims priority to Chinese Patent Application No. CN202310773235.3, filed on June 28, 2023, titled "Chip Power Consumption Evaluation Method, Power Consumption Model Generation Method, and Computer Device," the entire content of which is incorporated herein by reference.

**TECHNICAL FIELD**

The present application relates to the field of chip technology, and more particularly to a chip power consumption evaluation method, a power consumption model generation method, and a computer device.

**BACKGROUND**

With the advancement of manufacturing and packaging technologies, the integration level (i.e., the number of transistors per unit volume) and power density of integrated circuits are constantly increasing, making power consumption one of the important considerations in integrated circuit design. In the related technology, power consumption evaluation techniques are usually used to evaluate integrated circuit chips at the Register Transfer Language (RTL) stage, before physical implementation, and after physical implementation. The common point of these three stages of power consumption evaluation is that all the chip elements related to power consumption evaluation need to be input at once for the overall power consumption calculation of the design. For chips of a certain scale, the amount of input data related to power consumption calculation is very large, resulting in very low efficiency in evaluating the power consumption of integrated circuit chips.

At present, there is no effective solution to the problem of low efficiency in chip power consumption detection in the related technology.

**SUMMARY OF THE DISCLOSURE**

The present application provides a chip power consumption evaluation method, a power consumption model generation method, and a computer device to at least solve the problem of low efficiency in chip power consumption detection in the related technology.

In a first aspect, the present application provides a chip power consumption evaluation method, which includes:

determining a static modeling parameter and a dynamic evaluation parameter of a chip under tested; wherein the static modeling parameter is an unvarying chip design parameter in a power consumption constraint of a current power consumption scenario, and the dynamic evaluation parameter is a varying chip design parameter in the power consumption constraint of the current power consumption scenario;

calculating an intermediate calculation result based on the static modeling parameter and a first mapping relationship, and generating a target power consumption model that stores the intermediate calculation result; wherein the first mapping relationship is used to indicate a correspondence between the static modeling parameter in the power consumption constraint and the intermediate calculation result;

obtaining a power consumption evaluation result based on the dynamic evaluation parameter and the target power consumption model.

In some embodiments, determining the static modeling parameter of the chip under tested includes: obtaining a static factor information corresponding to a scenario requirement information, and determining the static modeling parameter of the chip under tested from the static factor information;

and/or,

determining the dynamic evaluation parameter of the chip under tested includes: obtaining a dynamic factor information corresponding to the scenario requirement information, and determining the dynamic evaluation parameter of the chip under tested from the dynamic factor information.

In some embodiments, generating the target power consumption model that stores the intermediate calculation result includes:

determining a data template corresponding to the scenario requirement information;

obtaining a model data required by the data template from the intermediate calculation results;

generating the target power consumption model based on the model data and the data template.

In some embodiments, the target power consumption model includes detailed model data; wherein the detailed model data at least includes a chip description data and the intermediate calculation result corresponding to the chip description data; and/or,

the target power consumption model includes a model metadata; wherein the model metadata at least includes model description data, and the model description data is used to describe an attributes of the target power consumption model.

In some embodiments, the static modeling parameter includes at least one hierarchical sub-module of the chip under tested, and the intermediate calculation result includes an intermediate calculation result corresponding to the hierarchical sub-module.

In some embodiments, each hierarchical sub-module includes multiple component units, and the method further includes:

for each component unit, obtaining the static modeling parameter corresponding to different power consumption types of the component unit, and the first mapping relationship corresponding to different power consumption types; wherein a same power consumption type corresponds to a same first mapping relationship;

calculating intermediate calculation results for different power consumption evaluation types of different component units based on the static modeling parameter corresponding to different power consumption types, and the first mapping relationship corresponding to different power consumption types;

merging intermediate calculation results of the same power consumption type in a same hierarchy to generate the intermediate calculation result corresponding to the hierarchical sub-module.

In some embodiments, the method further includes:

obtaining a block information for the chip under tested, determining at least two block chip areas of the chip under tested based on the block information, and generating at least two target power consumption models corresponding to the block chip areas based on the static modeling parameter;

inputting the dynamic evaluation parameter of each block chip area into the corresponding target power consumption model to obtain power consumption evaluation result corresponding to the block chip areas.

In a second aspect, the present application provides a chip power consumption evaluation method, which includes:

in response to a user's power consumption evaluation request, obtaining a target power consumption model; wherein the target power consumption model is used to store intermediate calculation result calculated based on the static modeling parameter of the chip under tested and a first mapping relationship, and the first mapping relationship is used to indicate the correspondence between the static modeling parameter in the power consumption constraint and the intermediate calculation result;

obtaining a dynamic evaluation parameter; wherein the static modeling parameter is an unvarying chip design parameter in the power consumption constraint of the current power consumption scenario, and the dynamic evaluation parameter is a varying chip design parameter in the power consumption constraint of the current power consumption scenario;

obtaining power consumption evaluation result based on the dynamic evaluation parameter and the target power consumption model.

In some embodiments, obtaining power consumption evaluation result based on the dynamic evaluation parameter and the target power consumption model includes:

determining a second mapping relationship; the second mapping relationship is used to indicate the correspondence between the dynamic evaluation parameter, the intermediate calculation result of the target power consumption model, and the power consumption evaluation result in the power consumption constraint;

obtaining power consumption evaluation result based on the dynamic evaluation parameter, the intermediate calculation result, and the second mapping relationship.

In a third aspect, the present application provides a power consumption model generation method, which includes:

determining the static modeling parameter of the chip under tested; wherein the static modeling parameter is an unvarying chip design parameter in the power consumption constraint of the current power consumption scenario;

calculating intermediate calculation result based on the static modeling parameter and a first mapping relationship, and generating a target power consumption model that stores the intermediate calculation result, to obtain power consumption evaluation result of the chip under tested; wherein the first mapping relationship is used to indicate the correspondence between the static modeling parameter in the power consumption constraint and the intermediate calculation result; the power consumption evaluation result are generated based on the dynamic evaluation parameter and the target power consumption model, and the dynamic evaluation parameter is a varying chip design parameter in the power consumption constraint of the current power consumption scenario.

In some embodiments, the target power consumption model includes detailed model data; wherein the detailed model data at least includes chip description data and intermediate calculation result corresponding to the chip description data; and/or,
the target power consumption model includes model metadata; wherein the model metadata at least includes model description data, and the model description data is used to describe the attributes of the target power consumption model.

In a fourth aspect, the present application provides a computer device, which includes a memory and a processor, the memory stores a computer program, and when the processor executes the computer program, it implements the chip power consumption evaluation method according to the first aspect or the second aspect, or the power consumption model generation method according to the third aspect.

Compared with the related technology, the chip power consumption evaluation method, power consumption model generation method, and computer device provided by the embodiments of the present application determine the static modeling parameter and a dynamic evaluation parameter of the chip under tested; wherein the static modeling parameter is an unvarying chip design parameter in the power consumption constraint of the current power consumption scenario, and the dynamic evaluation parameter is a varying chip design parameter in the power consumption constraint of the current power consumption scenario; calculate an intermediate calculation result based on the static modeling parameter and a first mapping relationship, and generate a target power consumption model that stores the intermediate calculation result; wherein the first mapping relationship is used to indicate the correspondence between the static modeling parameter and the intermediate calculation result; obtain power consumption evaluation result based on the dynamic evaluation parameter and the target power consumption model, thereby splitting the chip power consumption analysis process into power consumption modeling and power consumption evaluation parts, so that after modeling is completed, the subsequent power consumption evaluation steps only need to rely on the generated power consumption model, and at the same time, input relevant a dynamic evaluation parameter for multiple power consumption evaluation calculations, thereby improving the efficiency of evaluating the power consumption of the same design chip under different environments and behaviors, solving the problem of low efficiency in chip power consumption evaluation methods, and realizing an efficient and accurate chip power consumption evaluation method.

The details of one or more embodiments of the present application are set forth in the following drawings and descriptions to make the other features, objectives, and advantages of the present application more clear and understandable.

## BRIEF DESCRIPTION OF THE DRAWINGS

The drawings are provided to further understand the present application and form a part of the present application. The illustrative embodiments of the present application and their descriptions are used to explain the present application and do not constitute improper limitations on the present application.

FIG. 1 is a schematic diagram of an application environment of a chip power consumption evaluation method according to an embodiment of the present application.
FIG. 2 is a flowchart of a chip power consumption evaluation method according to an embodiment of the present application.
FIG. 3 is a flowchart of another chip power consumption evaluation method according to an embodiment of the present application.
FIG. 4 is a flowchart of a preferred embodiment of a chip power consumption evaluation method according to the present application.
FIG. 5 is a structural block diagram of a chip power consumption evaluation device according to an embodiment of the present application.
FIG. 6 is a structural block diagram of a chip power consumption evaluation system according to an embodiment of the present application.
FIG. 7 is a structural diagram of the interior of a computer device according to an embodiment of the present application.

## DETAILED DESCRIPTION OF PREFERRED EMBODIMENTS

In order to make the objectives, technical solutions, and advantages of the present application clearer and more understandable, the present application will be described and explained in detail below in conjunction with the drawings and embodiments. It should be understood that the specific embodiments described herein are merely used to explain the present application and are not intended to limit the present application. Based on the embodiments provided in the present application, all other embodiments obtained by those of ordinary skill in the art without making creative efforts are within the scope of protection of the present application. In addition, it can also be understood that although the efforts made in the development process may be complex and lengthy, for those of ordinary skill in the art related to the content disclosed in the present application, designing, manufacturing, or producing based on the disclosed technical content is only a routine technical means, and it should not be understood that the content disclosed in the present application is insufficient.

The term "embodiment" mentioned in the present application means that the specific features, structures, or characteristics described in conjunction with the embodiment can be included in at least one embodiment of the present application. The appearance of this phrase at various locations in the specification does not necessarily refer to the same embodiment, nor is it mutually exclusive with other embodiments. It is understood by those of ordinary skill in the art that the embodiments described in the present application can be combined with each other without conflict.

Unless otherwise defined, the technical terms or scientific terms involved in the present application shall have the usual meanings understood by those of ordinary skill in the art to which the present application belongs. The terms "one," "a," "an," "the," and the like involved in the present application do not indicate a quantity limitation, and can indicate a singular or plural form. The terms "comprise," "include," "have," and their any variations involved in the present application are intended to cover non-exclusive inclusions; for example, a process, method, system, product, or device that includes a series of steps or units (components) is not limited to the listed steps or units, but can also include other steps or units that are not listed, or can also include other steps or units that are inherent to these processes, methods, products, or devices. The terms "connect," "connect," "couple," and similar terms involved in the present application are not limited to physical or mechanical connections, but can also include electrical connections, whether direct or indirect. The term "multiple" involved in the present application refers to more than or equal to two. "And/or" describes the relationship between associated objects and indicates that there can be three relationships, for example, "A and/or B" can indicate: the existence of A alone, the simultaneous existence of A and B, and the existence of B alone. The terms "first," "second," "third," and the like involved in the present application are merely used to distinguish similar objects and do not represent a specific order for the objects.

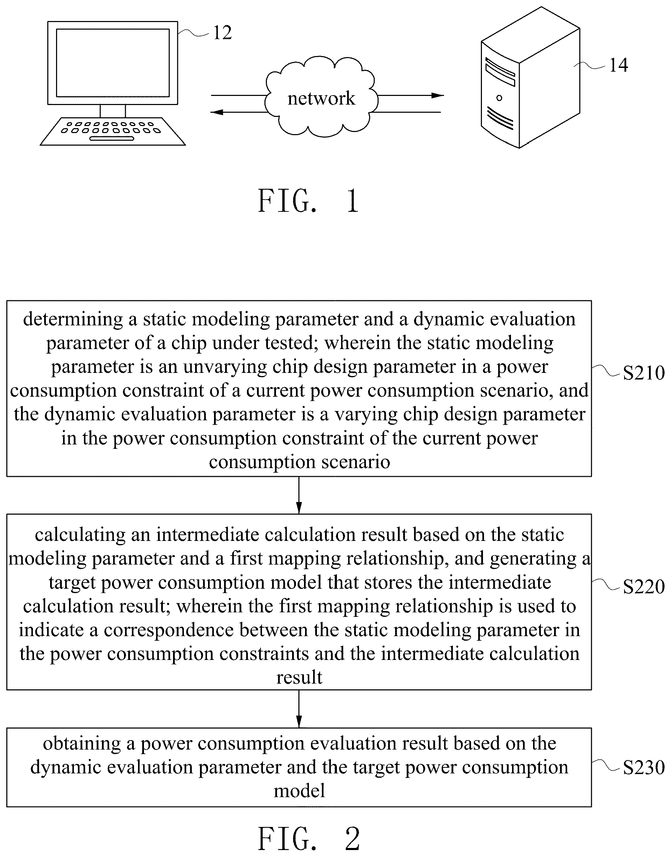

The chip power consumption evaluation method provided by embodiments of the present application can be applied to an application environment shown in FIG. 1. A terminal device 12 communicates with a server 14 through a network. The terminal device 12 is used to obtain user operations, and the server 14 responds to the user operations to obtain a static modeling parameter and a dynamic evaluation parameter of a chip under tested; the server 14 calculates an intermediate calculation result based on the static modeling parameter and a first mapping relationship, and generates a target power consumption model that stores the intermediate calculation result; wherein the first mapping relationship is used to indicate a correspondence between the static modeling parameter and the intermediate calculation result; the server 14 obtains a power consumption evaluation result based on the dynamic evaluation parameter and the target power consumption model, and feeds back the power consumption evaluation result to the user through the terminal device 12. The terminal device 12 can be, but is not limited to, various personal computers, laptops, and tablet computers; the server 14 can be implemented by an independent server or a server cluster composed of multiple servers.

In this embodiment, a chip power consumption evaluation method is provided. FIG. 2 is a flowchart of a chip power consumption evaluation method according to an embodiment of the present application. As shown in FIG. 2, the process includes the following steps:

Step S210, determining a static modeling parameter and a dynamic evaluation parameter of a chip under tested; wherein the static modeling parameter is an unvarying chip design parameter in a power consumption constraint of a current power consumption scenario, and the dynamic evaluation parameter is a varying chip design parameter in the power consumption constraint of the current power consumption scenario.

The chip under tested referred to above is an integrated circuit chip at any design stage, for example, it may be a chip that is not yet fully designed at the RTL stage or before physical implementation, but has certain chip structural data, or it can also be a chip that has completed the full design; that is, power consumption evaluation analysis can be performed on the current chip design at any stage of integrated circuit design.

The static modeling parameter refer to parameters in the chip parameters that can affect chip power consumption and remain unchanged in the current power consumption evaluation process, that is, parameters that remain in a static state, and at least include a chip structural information, and also include a chip structure, a parasitic parameter, and a chip timing information and other parameter related to the chip structure itself.

The dynamic evaluation parameter refer to parameters in the chip parameters that can cause power consumption changes due to design changes, that is, parameters that change dynamically in the chip power consumption evaluation process, and are parameters used to quickly evaluate the power consumption changes caused by different design parameter values or value combinations, such as process corner, temperature, voltage, frequency, and chip behavior data and other parameters.

The static modeling parameter and the dynamic evaluation parameter constitute the complete parameters of the chip under tested in the power consumption evaluation of the current power consumption assessment scenario, that is, all parameters in the power consumption constraint. Therefore, relying solely on the static modeling parameter or the dynamic evaluation parameter cannot calculate the power consumption evaluation result. The power consumption constraint include chip structural parameters, chip behavior parameters, chip environmental parameters, etc. The power consumption constraint refers to the rules used to calculate the power consumption of the chip under tested. The same power consumption evaluation type corresponds to the same power consumption constraint. In any power consumption evaluation scenario, when evaluating the power consumption of the chip under tested, it is necessary to evaluate the power consumption for different types of power consumption, and the power consumption evaluation types can include switching power consumption, internal power consumption, static power consumption, leakage power consumption, etc., each with its own power consumption constraint.

Furthermore, since power consumption evaluation analysis of the chip under tested usually needs to be carried out under different scenarios, the corresponding a static modeling parameter and a dynamic evaluation parameter can be determined according to the current evaluation scenario requirements.

In some embodiments, if the current power consumption evaluation scenario is a scenario for quickly evaluating the power consumption of the chip in different operating environments, then in this evaluation scenario, the operating environment needs to be changed, and the chip behavior does not need to be changed, thereby determining the corresponding a static modeling parameter to include not only the above-mentioned chip structural parameters but also chip behavior parameters, and determining the corresponding a dynamic evaluation parameter to include environmental parameters; if the current power consumption evaluation scenario is a scenario for quickly evaluating the power consumption of the chip in different behaviors, then in this evaluation scenario, the chip behavior needs to be changed, and the operating environment does not need to be changed, thereby determining the corresponding a static modeling parameter to include not only the above-mentioned chip structural parameters but also environmental parameters, and determining the corresponding a dynamic evaluation parameter to include the chip behavior parameters; if the current power consumption evaluation scenario is a scenario for quickly evaluating the power consumption of the chip in different operating environments and different behaviors, then in this evaluation scenario, both the operating environment and the chip behavior need to be changed, thereby determining the static modeling parameter to include the chip structural parameters, and the dynamic evaluation parameter to include the environmental parameters and the chip behavior parameters.

Step S220, calculating an intermediate calculation result based on the static modeling parameter and a first mapping relationship, and generating a target power consumption model that stores the intermediate calculation result; wherein the first mapping relationship is used to indicate a correspondence between the static modeling parameter in the power consumption constraint and the intermediate calculation result, and the target power consumption model is used to form a new power consumption constraint that indicates the correspondence between the intermediate calculation result and the power consumption evaluation result. Specifically, a partial power consumption calculation result can be determined through the above a static modeling parameter and the first mapping relationship, and the target power consumption model can be generated based on the partial power consumption calculation result.

The first mapping relationship is used to indicate the correspondence between the static modeling parameter and the intermediate calculation result, and the calculation using the first mapping relationship can obtain the intermediate calculation result. The first mapping relationship is determined according to the scenario requirement information, and when the scenario requirement is determined, it is known what mapping relationship can be used to obtain the intermediate calculation result through what a static modeling parameter in the current scenario. The obtained intermediate calculation result refers to the power consumption of the current scenario in which the chip design parameters do not change. For example, the intermediate calculation result includes power consumption information for a certain chip structure, and the intermediate calculation result includes the design hierarchy structure, the power consumption value of the current hierarchy structure, and can also include the circuit network information of the current hierarchy structure.

Furthermore, the target power consumption model, as an intermediate form in the entire power consumption evaluation analysis process, can use the intermediate calculation result stored in the target power consumption model to form a new power consumption constraint that uses the intermediate calculation results to represent the power consumption constraint, that is, to form a new power consumption constraint that indicates the relationship between the intermediate calculation result, the dynamic evaluation parameter and the power consumption evaluation result. The role of the intermediate form established by the target power consumption model is to store the power consumption calculation results related to the static modeling parameter that do not change in the current power consumption evaluation scenario, reduce the time and resources occupied by each calculation when calculating power consumption based on changing parameters later, and facilitate the subsequent specific power consumption evaluation to directly generate chip evaluation results based on a dynamic evaluation parameter, thereby accelerating the chip power consumption evaluation process. It should be noted that the storage format of the target power consumption model can include, but is not limited to, ASCII format text files or binary format files, and the model file can be directly stored in storage spaces such as computer memory. At the same time, for models stored in text file format, their formats can include, but are not limited to, YAML, JSON, XML, HTML, other markup languages, or programming languages. It can be understood that the above target power consumption model can be stored in a single file or split into multiple files.

Step S230, obtaining a power consumption evaluation result based on the dynamic evaluation parameter and the target power consumption model. Wherein, after the modeling is completed through the above steps S220, when power consumption evaluation is needed, by loading the configuration files and runtime scripts required for power consumption evaluation, running the modeling tool software deployed with the target power consumption model, and then inputting the determined a dynamic evaluation parameter into the called target power consumption model, the power consumption evaluation result of the chip under tested can be obtained by using the modeling tool software to perform complete power consumption calculations based on the dynamic evaluation parameter and intermediate calculation result.

Furthermore, in the above steps S220 to S230, the first mapping relationship between the static modeling parameter and the intermediate calculation result can be constituted by one or more power consumption calculation formulas; different power consumption evaluation types have different mapping relationships, and the same power consumption type corresponds to the same mapping relationship, and the power consumption evaluation types include, but are not limited to, switching power consumption, internal power consumption, static power consumption, leakage power consumption, etc. For example, the power consumption calculation formula can be set as a calculation expression for a single-line switching power consumption (a switching power), and the power consumption calculation formula can be regarded as a kind of power consumption constraint condition, as shown in the following formula 1:

$$P_s = C \times V^2 \times f \times TR \qquad \text{Formula 1}$$

In the above formula, $P_s$ is the switching power consumption, C is a total capacitance of the line, including a parasitic capacitance and an input pin capacitance of a load unit; V is a supply voltage; f is a working frequency of the chip, TR is a flip probability. In some power consumption evaluation scenarios, in the power consumption constraint determined based on formula 1, the unvarying chip design parameters are C, V, f, and the varying chip design parameters are TR, the first mapping relationship is $C \times V^2 \times f$, the intermediate calculation result is the result obtained by calculating $C \times V^2 \times f$, and the new power consumption constraint relationship formed by the target power consumption model is $P_s =$ intermediate calculation result $\times TR$. Or in some other power consumption evaluation scenarios, the fixed chip design parameters in the power consumption constraint are C, V, and the changing chip design parameters are f, TR, the first mapping relationship is $C \times V^2$, the intermediate calculation result is the result obtained by calculating $C \times V^2$, and the new power consumption constraint relationship formed by the target power consumption model is $P_s =$ intermediate calculation result $\times f \times TR$.

Or, the power consumption calculation formula can also include a calculation expression for internal power consumption (Internal power). In the calculation process, the logic gates in the chip can be roughly equivalent to resistors, thereby obtaining the corresponding power consumption value caused by short-circuit current. This power consumption calculation formula can be regarded as a kind of power consumption constraint condition, as shown in the following formula:

$$P_I = (V^2/R) \times f \times TR \qquad \text{Formula 2}$$

In the above formula, $P_I$ is the internal power consumption, R is the equivalent resistance of the logic gate, V is the supply voltage, f is the working frequency of the chip, TR is the flip probability. In some power consumption evaluation scenarios, the unvarying chip design parameters in the power consumption constraint are V, R, f, and the varying chip design parameters are TR, the first mapping relationship is $(V^2/R) \times f$, the intermediate calculation result is the result obtained by calculating $(V^2/R) \times f$, and the power consumption constraint relationship formed by the target power consumption model is $P_I =$ intermediate calculation result $\times TR$. Or in some other power consumption evaluation scenarios, the fixed chip design parameters in the power consumption constraint are V, R, and the changing chip design parameters are f, TR, the first mapping relationship is $V^2/R$, the intermediate calculation result is the result obtained by calculating $V^2/R$, and the power consumption constraint relationship formed by the target power consumption model is $P_I =$ the intermediate calculation result $\times f \times TR$.

Or, the power consumption calculation formula can also include a calculation expression for static power consumption/leakage power consumption (Leakage power), and this power consumption calculation formula can be regarded as a kind of power consumption constraint condition, as shown in the following formula:

$$P_L = c_0 \times T^2 \times e\char`\^(c_1/T) \qquad\qquad \text{Formula 3}$$

In some power consumption evaluation scenarios, in the above formula, $P_L$ is the static power consumption, $c_0$ and $c_1$ are empirical parameters related to the circuit structure, which belong to the fixed chip parameters in the power consumption constraint, T is the temperature, which belongs to the changing chip design parameters.

Then, through the above power consumption calculation formulas, the first mapping relationship can be constituted, which is used to indicate the correspondence between the static modeling parameter and the intermediate calculation result; for example, for the single-line switching power consumption calculation formula shown in formula 1, or for the internal power consumption calculation formula shown in formula 2, only the total capacitance C is the static modeling parameter, that is, it does not change in the subsequent evaluation, V, f, TR can all change, so for the power consumption of this line or logic gate, the first mapping relationship can be determined based on formulas 1 and 2.

After obtaining the intermediate calculation result based on the static modeling parameter and the first mapping relationship, the target power consumption model that stores the intermediate calculation result is generated. The target power consumption model can be used to form a new power consumption constraint relationship that indicates the correspondence between the intermediate calculation result and the power consumption evaluation result. This new power consumption constraint relationship represents the computational rules among the intermediate calculation result, the dynamic evaluation parameter, and power consumption evaluation result. Subsequently, the power consumption evaluation result can be obtained based on the dynamic evaluation parameter and the target power consumption model. For example, for the single-line switching power consumption calculation formula shown in formula 1, or for the internal power consumption calculation formula shown in formula 2, the total capacitance C is the static modeling parameter, while V, f, and TR can all change. Therefore, for the power consumption of this line or logic gate, the value of the total capacitance C and the form of the above expression can be recorded in the power consumption model based on the first mapping relationship to obtain the intermediate calculation result and generate the target power consumption model. The specific power consumption value can then be calculated in the subsequent power consumption evaluation process by substituting the specific values of V, f, and TR. Or, for the static power consumption calculation formula shown in formula 3, $c_0$ and $c_1$ are empirical parameters related to the circuit structure and belong to the static modeling parameter, while T is the temperature and belongs to the dynamic evaluation parameter. Therefore, for the static power consumption of this logic gate, the values of $c_0$ and $c_1$ and the above expression can be recorded in the target power consumption model, and the specific power consumption value can then be calculated in the subsequent evaluation process by substituting the specific temperature value of the dynamic evaluation parameter. Furthermore, in the model generation process, the present embodiment can also use interpolation methods for power consumption calculations to improve accuracy. For example, linear interpolation can be used for switching power consumption generation, and non-linear interpolation can be used for internal power consumption and static power consumption.

It can be understood that the process of power consumption evaluation calculation based on a dynamic evaluation parameter is similar to the above power consumption model generation process. It should be noted that the power consumption modeling and evaluation method provided in this embodiment is not limited to a specific design stage, that is, it can be used in both front-end and back-end design processes, and the usage process and method are the same, only the input files are different; similarly, for the above different application scenarios, the modeling and evaluation methods are the same, only the input content is different. Therefore, by using the target power consumption model as an intermediate form, the variable factors in the power consumption calculation process are transformed into calculable models, which is conducive to improving the efficiency of chip power consumption simulation evaluation.

In the related technology, the power consumption analysis is performed by inputting all elements of the chip under tested, such as environment, behavior, structure, etc., at once for complete chip power consumption calculation. If one parameter in the input information changes, the power consumption evaluation tool needs to perform a complete power consumption calculation again. For chips of a certain scale, the input data related to power consumption calculation is usually very large. For example, the size of a standard cell library file can reach 1.5 G, the size of a parasitic parameter file can reach more than 10 G, and the VCD file describing the circuit behavior can reach hundreds of G. Since the parsing and processing of these files take a lot of time, the extra cost of repeated calculation is huge, resulting in very low efficiency in evaluating the power consumption of the same chip under different environments and behaviors.

Compared with the power consumption calculation method in the related technology that needs to output all elements at once and results in low power consumption calculation efficiency for chips, the present application, through the above steps S210 to S230, first models the power consumption calculation model based on the fixed a static modeling parameter of the chip under tested, generates the target power consumption model as an intermediate form, and then inputs the dynamic evaluation parameter of the chip under tested in the power consumption evaluation to obtain the power consumption evaluation result of the chip under tested, thereby splitting the chip power consumption analysis process into power consumption modeling and power consumption evaluation parts, so that after modeling is completed, the subsequent power consumption evaluation steps only need to rely on the generated power consumption model, and at the same time, input relevant a dynamic evaluation parameter for multiple power consumption evaluation calculations. Therefore, based on the generated power consumption model, significant data merging and compression are realized, the parameter processing cost is greatly reduced, and the efficiency of evaluating the power consumption of the same design chip under different environments and behaviors is improved, effectively solving the problem of low efficiency in chip power consumption evaluation and realizing an efficient and accurate chip power consumption evaluation method.

In some embodiments, the above-mentioned of determining the static modeling parameter and a dynamic evaluation parameter of the chip under tested also includes the following steps: obtaining the static factor information corresponding to the scenario requirement information, and determining the static modeling parameter of the chip under tested based on the static factor information; and/or obtaining a dynamic factor information corresponding to the scenario requirement information, and determining the dynamic evaluation parameter of the chip under tested based on the dynamic factor information. The static factor information may include files for obtaining the static modeling parameter corresponding to the current scenario requirements, or data information input by the user for intermediate result calculations; the dynamic factor information may include files for obtaining the dynamic evaluation parameter, or data input by the user that may change during the final power consumption evaluation of the chip design. The static factor information and dynamic factor information may be in the form of text or binary files or data. Before generating the target power consumption model, it is possible to simply obtain the static modeling parameter to generate the target power consumption model. Alternatively, all parameters can be obtained after confirming the scenario, and only the static modeling parameter is used in the target model generation stage; while in the power consumption evaluation stage, the dynamic evaluation parameter is utilized. Furthermore, the dynamic evaluation parameter can also be quickly replaced in this stage. In some embodiments, obtaining static factor information corresponding to the scenario requirement information includes obtaining the scenario requirement information. The user can input the current scenario that requires power consumption evaluation on the user interface, that is, the scenario requirement information, so as to confirm the required static factors based on the scenario requirement information. The confirmation method can be manually determining the static factors, or after the user selects the current scenario requirement information on the user interface, the user interface displays a prompt message for the corresponding static factors based on the selected scenario requirement information, to remind the user to input the corresponding static factor information based on the prompt message. Static factors include chip structure information, etc. Next, after obtaining the static factor information input by the user based on the current power consumption evaluation scenario requirement information to determine the static factors required for the current power consumption evaluation, the user inputs the corresponding static factor information based on the static factors, such as files containing static factors, or inputs data related to static factors. In response to the target power consumption model generation request, the static modeling parameter is obtained from the static factor information input by the user.

In some embodiments, obtaining the scenario requirement information, determining the dynamic factors based on the scenario requirement information, obtaining the dynamic factor information input by the user based on the dynamic factors, and responding to the power consumption evaluation request, to obtain a dynamic evaluation parameter from the dynamic factor information input by the user. Wherein, the scenario requirement information refers to the power consumption evaluation scenario of the integrated circuit design chip, and the scenario requirement information can be determined by staff in combination with the actual situation; for example, the scenario requirement information can be used to indicate the evaluation of chip power consumption under different operating environments, or it can also be used to indicate the evaluation of chip power consumption under different chip behaviors. The method of obtaining dynamic factor information and obtaining a dynamic evaluation parameter based on dynamic factor information in this embodiment is similar to the method of obtaining static factor information and obtaining a static modeling parameter based on static factor information described above, and will not be repeated here.

In some embodiments, determining the static modeling parameter and the dynamic evaluation parameter of the chip under tested includes: obtaining preset scenario requirement information and the to-be-processed parameters of the chip under tested, and classifying the to-be-processed parameters according to the scenario requirement information to obtain the static modeling parameter and the dynamic evaluation parameter. Before generating the target power consumption model, although the dynamic evaluation parameter is determined, the target power consumption model can still be generated only using the static modeling parameter according to the scenario requirement, without using the dynamic evaluation parameter. In the power consumption evaluation stage, the static modeling parameter is locked, and only the dynamic evaluation parameter can be modified to speed up the power consumption evaluation.

Specifically, the fixed parameters and variable parameters of the chip will also be different for different power consumption evaluation scenarios corresponding to different scenario requirement information, thereby classifying the to-be-processed parameters of the chip under tested according to the scenario requirement information to determine which parameters in the processed parameters are a static modeling parameter and which parameters are a dynamic evaluation parameter; further, the specific values of the dynamic evaluation parameter need to be determined and input into the above target power consumption model for calculation in the subsequent evaluation. Specifically, when the scenario requirement information indicates that the current need is to quickly evaluate the power consumption of the chip under tested in different operating environments, the determined a static modeling parameter can include the chip structure and chip behavior information in the to-be-processed parameters, and the dynamic evaluation parameter can include the environment parameters in the to-be-processed parameters; when the scenario requirement information indicates that the current need is to quickly evaluate the power consumption of the chip under tested in different behaviors, the corresponding a static modeling parameter can include chip structure and environment parameters, and the dynamic evaluation parameter can include chip behavior information; when the scenario requirement information indicates that the current need is to quickly evaluate the power consumption of the chip in different operating environments and different behaviors, the static modeling parameter can include chip structure, and the dynamic evaluation parameter can include environment parameters and chip behavior information.

In some embodiments, the chip structural information can include design constraint files (syopsys design format, SDC), RTL, Unified Power Format (UPF), design netlists, standard cell libraries, Library Exchange Format/Design Exchange Format (LEF/DEF), Standard Parasitic Exchange Format (SPEF), timing information, clock tree models, and wire load models, etc.; the chip behavior information can include flip rates and static probabilities, Fast Signal Database (FSDB), Video Compact Disc (VCD), or Switching Activity Interchange Format (SAIF) files, etc., which are used to record chip flip data; the environment parameters can include process corners, supply voltage, on-chip temperature, and frequency, etc.

Through the above embodiments, based on different scenario requirement information to determine static factor information and dynamic factor information, thereby determining a static modeling parameter and a dynamic evaluation parameter, so that the above embodiments can be applied to different power consumption evaluation scenarios, which is conducive to improving the accuracy and efficiency of chip power consumption evaluation.

In some embodiments, generating the target power consumption model based on the intermediate calculation result includes: obtaining model data required by the data template of the intermediate calculation result; generating the target power consumption model based on the model data and the data template. The data template stipulates the format and content of data storage, and can be a visual template, which can be displayed to users upon request.

Wherein, the model data is stored in accordance with the requirements of the data template; The data template refers to the template without data that is used in model generation, such as formula forms, chart formats. The data template can be generated and stored in advance by users, or it can also be automatically generated based on user input parameters. For example, when it is detected that the number of current input a static modeling parameter is greater than a certain threshold, it indicates that there are more input points in the current input, then in the modeling process, chart template such as the corresponding power consumption value-voltage relationship table or power consumption value-frequency relationship table, etc., can be automatically generated. Further, the data template can include a visual template, taking the visual template in the form of a table as an example, the table template can be a scalar, multidimensional table, function, description of the hierarchical design structure of the chip, etc. Then, after calculating the power consumption evaluation result, it can generate visual result according to the power consumption evaluation result data and the visual template, and the visual result can be sent to the terminal device for display. That is, after calculating the power consumption evaluation result, the power consumption evaluation result data is substituted into the visual template to generate visual results accordingly, and the visual results are sent to the terminal device for display. Through the above embodiments, multiple visual templates are generated and stored based on the target power consumption model, so that in the power consumption analysis, the visual results can be quickly drawn and generated using the visual template, thereby facilitating users to query and grasp the chip power consumption evaluation situation. Further, the visible content includes two major parts, that is, the metadata and detailed data of the target power consumption model.

In some embodiments, the target power consumption model includes detailed model data, wherein the detailed model data at least includes chip description data and the intermediate calculation result corresponding to the chip description data, the chip description data is used to describe chip design information related to the intermediate calculation result, for example, the hierarchical structure information of the chip, power supply network information, etc., and the power consumption description data. The power consumption description data is used to store intermediate calculation result related to the chip design information, for example, the intermediate calculation result of a certain layer of the chip design. And/or, the target power consumption model includes model metadata; wherein the model metadata at least includes model description data, the model description data is used to describe the attributes of the target power consumption model, and the model description data can be used to parse the target power consumption model in the power consumption evaluation stage.

Wherein, the model metadata includes, but is not limited to, the following model description data: model version information, model data unit information, model parameters, model generation time, model generation input information, and model formula templates, etc. Specifically, the model version information can be generated cumulatively according to the current modeling times to distinguish different model versions, for example, the model version information can be v1.0; the model data unit information and model parameters can be determined according to the current input a static modeling parameter, for example, the model data unit information can be voltage: millivolts, current: milliamperes, etc., to determine the units of the data provided in the model, and the model parameters can include temperature or voltage, etc.; the model generation input information includes file names, environment parameters, etc., for the purpose of rebuilding the model; the model formula template is used to clarify the calculation method of power consumption involved in the model. It can be understood that the model metadata also includes other data that is not directly related to the specific chip data but related to the model itself, and will not be repeated here.

Wherein, the detailed data includes, but is not limited to, the following chip description data: the top-level module name of the chip, the power supply network information of the chip, the power consumption information of each design level unit of the chip, and other chip power consumption related information, etc. Specifically, the top-level module name of the chip is used to clarify the specific module represented by the model; the power supply network information of the chip is used to distinguish different power supply networks in the power consumption evaluation stage, for example, the power supply network information can include the number and name of the VDD network; the power consumption information of each design level unit of the chip can be marked in the form of scalars, multidimensional tables, and functions, for example, an overall Top module includes multiple sub-modules A, B, C, etc., and each sub-module can also include its own sub-modules, for example, sub-module A includes a, b, etc., at this time, the hierarchical information and power consumption information can be recorded at the same time, for example, the power consumption data of the Top/A/a module is x, the power consumption data of the Top/A/b module is y, the power consumption data of the Top/B module is m, the power consumption data of the Top/B module is m, so as to calculate the power consumption of each level of the module; x, y, m, n, etc., can be represented in the form of scalars, multidimensional tables, functions, etc. It should be noted that the metadata and detailed data both belong to the model content; in the power consumption evaluation process, the model description data and other metadata are mainly used by the evaluation tool to parse the model data, remove duplicates, and build the corresponding calculation model, while the chip description data and other detailed data are used to calculate the final chip power consumption value in the power consumption evaluation stage.

In some embodiments, for step S230, obtaining power consumption evaluation result based on the dynamic evaluation parameter and the target power consumption model also includes the following steps: determining a second mapping relationship; the second mapping relationship is used to indicate the correspondence between the dynamic evaluation parameter in the power consumption constraint, the intermediate calculation result of the target power consumption model, and the power consumption evaluation result; obtaining power consumption evaluation result based on the dynamic evaluation parameter, the intermediate calculation result, and the second mapping relationship.

In some embodiments, the second mapping relationship can be determined based on the scenario requirement information, or it can be obtained from the target power consumption model. In some embodiments, the power consumption constraint conditions of the power consumption evaluation result can also be used to describe and indicate the second mapping relationship with the intermediate calculation result formed by the target power consumption model, the power consumption constraint condition is used to indicate the calculation rules between the dynamic evaluation parameter, the intermediate calculation result of the target power consumption model, and the power consumption evaluation result. Since the power consumption evaluation in the embodiments of the present application is related to the scenario requirement, when the scenario requirement information is determined, the mapping relationship used to calculate the intermediate calculation result and the final power consumption evaluation has already been determined, or, since the target power consumption model is determined based on the scenario requirement information, the second mapping relationship can also be stored in the target power consumption model, and can be directly obtained from the target power consumption model during power consumption evaluation. For example, in the current scenario requirement is to quickly evaluate the power consumption of the chip in different operating environments and different behaviors, and when determining the first mapping relationship between the static modeling parameter C and the intermediate calculation result is determined based on formula 1, the target power consumption model can be established based on the first mapping relationship, and in the power consumption evaluation, the dynamic evaluation parameter and the second mapping relationship between the intermediate calculation result and the final power consumption evaluation result can be determined based on the scenario requirement information, or the second mapping relationship can also be determined based on the scenario requirement information and stored in the target power consumption model when the target power consumption model is generated based on the first mapping relationship, and can be directly obtained from the target power consumption model in the power consumption evaluation to obtain the power consumption evaluation result.

In some embodiments, the dynamic evaluation parameter can be input into the target power consumption model to obtain power consumption evaluation result. In another embodiment, the intermediate calculation result can also be obtained from the target power consumption model, and the dynamic evaluation parameter and the intermediate calculation result can be calculated by the calculation method of the second mapping relationship to obtain the power consumption evaluation result.

In some embodiments, in the power consumption evaluation process, the metadata of the target power consumption model is mainly used by the evaluation tool to parse the model data, remove duplicates, and build the corresponding calculation model, while the detailed data of the target power consumption model is used to calculate the specific chip power consumption in the power consumption evaluation stage.

In some embodiments, the static modeling parameter includes at least one hierarchical sub-module of the chip under tested, and the intermediate calculation result includes an intermediate calculation result corresponding to the hierarchical sub-module. That is, when the chip under tested includes at least one hierarchical sub-module, the static modeling parameter of each hierarchical sub-module can be obtained through the above method embodiments, thereby calculating the intermediate calculation result of each hierarchical sub-module.

In some embodiments, each hierarchical sub-module includes multiple component units, and the method further includes:

S221, for each component unit, obtaining the static modeling parameter corresponding to different power consumption types of the component unit, and the first mapping relationship corresponding to different power consumption types; wherein the same power consumption type corresponds to the same first mapping relationship. The power consumption types include, but are not limited to, various switching power consumption, internal power consumption, static power consumption, leakage power consumption, etc.

S222, calculating intermediate calculation results for different power consumption evaluation types of different component units, based on the static modeling parameter corresponding to different power consumption types, and the first mapping relationship corresponding to different power consumption types;

S223, merging intermediate calculation results of the same power consumption type in a same hierarchy to generate the intermediate calculation result corresponding to the hierarchical sub-module.

In the above steps S221-S223, the intermediate calculation results of the same power consumption type can be summarized and compressed based on the standard cell data of the same design level in the chip through the above target power consumption model, for example, by merging the coefficients of multiple polynomials of the same form, thereby greatly reducing the data volume of the power consumption model. Specifically, taking the calculation of switching power consumption of each component unit as an example, assuming that the hierarchical sub-module includes three logic gates, namely U1, U2, and U3, using the above formula 1 to calculate the switching power consumption calculation values of each logic gate respectively: $P_{S1}=C1\times V^2\times f\times TR$; $P_{S2}=C2\times V^2\times f\times TR$; $P_{S3}=C3\times V^2\times f\times TR$; wherein, in some power consumption evaluation scenarios, the static modeling parameter is the capacitance C, and the intermediate calculation results of each component unit for the switching power consumption type can be obtained through the capacitance values C1, C2, C3 of each logic gate. Then, the total switching power consumption calculation value of the three logic gates is $P_S=C1\times V^2\times f\times TR+C2\times V^2\times f\times TR+C3\times V^2\times f\times TR=(C1+C2+C3)\times V^2\times f\times TR$. That is, in the model file, the intermediate calculation results of the three component units can be merged, and the value obtained by calculating C1+C2+C3 is recorded as one value to merge the intermediate calculation results of the same power consumption type in the same hierarchy. If the static modeling parameters are the capacitance C and the supply voltage V, then the intermediate calculation results of the three component units are merged into C1V1+C2V2+C3V3, where V1, V2, V3 are the supply voltage values corresponding to each logic gate, thereby obtaining the intermediate calculation results corresponding to the hierarchical sub-module, instead of directly storing the three original data values, similarly, for internal power consumption, leakage power consumption, and other power consumption evaluation types, similar merging can also be performed, thereby effectively compressing the data.

Through the above steps S231-S223, data compression processing is performed on all static calculation values through the hierarchical sub-modules, obtaining compressed power consumption evaluation result, which is conducive to reducing the data volume of the power consumption model and effectively reducing the memory space occupancy rate.

In some embodiments, the chip under tested includes multiple component units, and the chip power consumption evaluation method further includes the following steps: calculating the sub-power consumption values corresponding to the component units based on the dynamic evaluation parameter and the target power consumption model; obtaining the identification information corresponding to the component unit, and obtaining the power consumption evaluation result based on the identification information and the sub-power consumption values; detecting a power consumption query instruction for the component units; in response to the detected power consumption query instruction, searching for the sub-power consumption values in the power consumption evaluation result, and determining the corresponding target sub-power consumption values based on the identification information from all the sub-power consumption values; generating power consumption query results based on the target sub-power consumption values, and sending the power consumption query results to the terminal device for display. Specifically, each component's power consumption value is stored separately based on the identification information of the component units, so that when users need to find the power consumption value corresponding to a single logic gate or a single component, they can search for it based on the above identification information of the component units, thereby effectively improving the convenience for users to query power consumption values.

In some embodiments, the chip power consumption evaluation method further includes the following steps: obtaining a block information for the chip under tested, determining at least two block chip areas of the chip under tested based on the block information, and generating at least two target power consumption models corresponding to the block chip areas based on the static modeling parameter; inputting the dynamic evaluation parameter of each block chip area into the corresponding target power consumption model to obtain power consumption evaluation result corresponding to the block chip areas. Wherein, the block information can be set in advance by the staff, for example, it can be set to divide a certain design chip according to the realized functions, etc.; then for the different areas of the chip under tested, the above method embodiments can be used respectively to establish a corresponding target power consumption model for each area, which is conducive to improving the accuracy and efficiency of power consumption model calculation. In another embodiment, a unified target power consumption model can also be used for the same batch of design chips for simulation and power consumption evaluation.

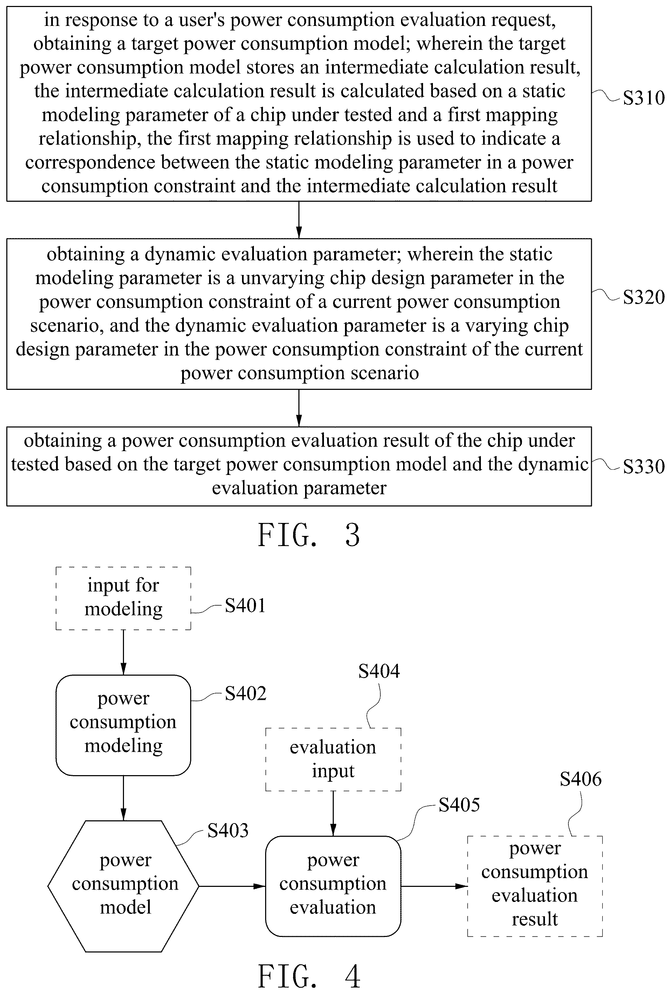

In this embodiment, another chip power consumption evaluation method is provided. FIG. 3 is a flowchart of another chip power consumption evaluation method according to an embodiment of the present application. As shown in FIG. 3, the process includes the following steps:

Step S310, in response to a user's power consumption evaluation request, obtaining a target power consumption model; wherein the target power consumption model stores an intermediate calculation result, the intermediate calculation result is calculated based on a static modeling parameter of a chip under tested and a first mapping relationship, the first mapping relationship is used to indicate a correspondence between the static modeling parameter in a power consumption constraint and the intermediate calculation result, and the target power consumption model is used to form a new power consumption constraint that indicates the correspondence between the intermediate calculation result and the power consumption evaluation result.

Step S320, obtaining a dynamic evaluation parameter; wherein the static modeling parameter is a unvarying chip design parameter in the power consumption constraint of a current power consumption scenario, and the dynamic evaluation parameter is a varying chip design parameter in the power consumption constraint of the current power consumption scenario.

Step S330, obtaining a power consumption evaluation result of the chip under tested based on the target power consumption model and the dynamic evaluation parameter.

Through the above steps S310 to S330, in the power consumption analysis evaluation, the dynamic evaluation parameter of the chip under tested are input into the target power consumption model that is pre-built and stores intermediate calculation result calculated based on the static modeling parameter of the chip under tested, and then the final power consumption evaluation result are calculated based on the dynamic evaluation parameter and the partial calculation results of the intermediate calculation result, thereby greatly improving the power consumption evaluation efficiency, effectively solving the problem of low efficiency in chip power consumption detection, and realizing an efficient and accurate power consumption calculation method.

In some embodiments, obtaining power consumption evaluation result based on the dynamic evaluation parameter and the target power consumption model also includes the following steps: determining a second mapping relationship; wherein the second mapping relationship is used to indicate a correspondence between the dynamic evaluation parameter in the power consumption constraint, the intermediate calculation result of the target power consumption model, and the power consumption evaluation result; obtaining the power consumption evaluation result based on the dynamic evaluation parameter, the intermediate calculation result, and the second mapping relationship.

In this embodiment, a power consumption model generation method is provided, which includes the following steps:

determining a static modeling parameter of a chip under tested; wherein the static modeling parameter is an unvarying chip design parameter in a power consumption constraint of a current power consumption scenario;

calculating intermediate calculation result based on the static modeling parameter and a first mapping relationship, and generating a target power consumption model that stores the intermediate calculation result, to obtain a power consumption evaluation result of the chip under tested; wherein the first mapping relationship is used to indicate a correspondence between the static modeling parameter in the power consumption constraint and the intermediate calculation result; the power consumption evaluation result are generated based on a dynamic evaluation parameter and the target power consumption model, and the dynamic evaluation parameter is a varying chip design parameter in the power consumption constraint of the current power consumption scenario.

Through the above embodiments, a target power consumption model that stores intermediate calculation result is pre-built based on a static modeling parameter and a first mapping relationship, so that in the subsequent chip power consumption simulation evaluation, only the dynamic evaluation parameter need to be input to perform multiple power consumption evaluation calculations based on the generated power consumption model, to quickly generate chip evaluation results, thereby solving the problem that when an element of the chip changes, a complete calculation needs

EP 4 738 180 A1

to be performed again, and effectively improving the efficiency of evaluating the power consumption of the same design chip under different environments and behaviors.

In some embodiments, the target power consumption model includes a detailed model data; wherein the detailed model data at least includes a chip description data and intermediate calculation result corresponding to the chip description data; and/or, the target power consumption model includes a model metadata; wherein the model metadata at least includes a model description data, and the model description data is used to describe an attributes of the target power consumption model.

Below, a preferred embodiment of the present application will be described and explained. FIG. 4 is a flowchart of a preferred embodiment of a chip power consumption evaluation method according to the present application. As shown in FIG. 4, the process includes the following steps:

Step S401, obtaining an input file for a static modeling parameter required for modeling, the input file can be in text form or binary form. Further, preparing configuration files and runtime scripts required for modeling tools. Wherein, for the above input files, the completeness and format correctness of the input content can also be checked through the terminal device or the main control device, etc., to avoid chip power consumption evaluation errors caused by incorrect input, etc. In addition, the configuration files are used to provide evaluation modes, log levels, and other configurations. The scripts are used to indicate the runtime steps of the modeling tools, for example, the runtime steps described by the script: read input files; set runtime modes; run timing analysis; run power consumption analysis; output power consumption analysis results; export files.

Step S402, in response to a user's target power consumption model generation request, loading modeling configuration files and running modeling scripts, using the modeling configuration files and modeling scripts to obtain the static modeling parameter required for power consumption modeling from the input files, performing fixed part power consumption modeling, and generating intermediate calculation result. Wherein, the process of loading configuration files and running scripts may not be visible, depending on whether the tool displays the loading process through logs or interfaces.

Step S403, obtaining an information required by the target power consumption model from the intermediate calculation result, and generating the target power consumption model.

Step S404, obtaining input files for a dynamic evaluation parameter required for power consumption evaluation detection.

Step S405, in response to a user's power consumption evaluation request, loading power consumption evaluation configuration files, running power consumption evaluation scripts, using the power consumption evaluation configuration files and power consumption evaluation scripts to obtain a dynamic evaluation parameter and the target power consumption model required for power consumption evaluation from the input files, and performing power consumption evaluation.

Step S406, in response to a user's power consumption evaluation request, checking the input content, the completeness of the input files, and the correctness of the input format, etc., to exclude possible problems as much as possible before running; then obtaining analysis results through calculation, and finally obtaining a power consumption evaluation result.

It should be noted that in the above process or the flowchart shown in the figure, the steps shown can be executed in a computer system such as a set of computer executable instructions, and although a logical sequence is shown in the flowchart, in some cases, the steps shown or described can be executed in a different order from that shown here.

This embodiment also provides a chip power consumption detection device, which is used to implement the above embodiments and preferred implementation methods. Those that have been described will not be repeated. As used below, the terms "module," "unit," "sub-unit," etc. refer to a combination of software and/or hardware that can achieve the intended functions. Although the device described in the following embodiments is preferably implemented in software, implementation in hardware, or a combination of software and hardware, is also possible and contemplated.

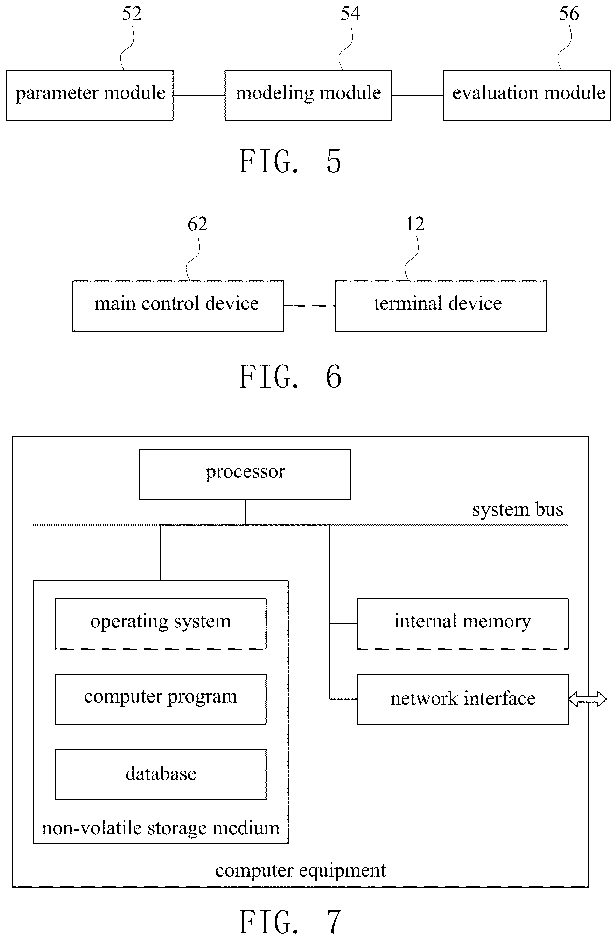

FIG. 5 is a structural block diagram of a chip power consumption evaluation device according to an embodiment of the present application. As shown in FIG. 5, the device includes: a parameter module 52, a modeling module 54, and an evaluation module 56; the parameter module 52 is used to determine a static modeling parameter and a dynamic evaluation parameter of the chip under tested; wherein the static modeling parameter is an unvarying chip design parameter in the power consumption constraint of a current power consumption scenario, and the dynamic evaluation parameter is a varying chip design parameter in the power consumption constraint of the current power consumption scenario; the modeling module 54 is used to calculate intermediate calculation result based on the static modeling parameter and a first mapping relationship, and generate a target power consumption model that stores the intermediate calculation result; wherein the first mapping relationship is used to indicate the correspondence between the static modeling parameter in the power consumption constraint and the intermediate calculation result; the evaluation module 56 is used to obtain power consumption evaluation result of the chip under tested based on the dynamic evaluation parameter and the target power consumption model.

Through the above embodiments, the modeling module 54 models the power consumption calculation model based on the fixed a static modeling parameter of the chip under tested, to generate the target power consumption model as an intermediate form, and the evaluation module 56 obtains the power consumption evaluation result of the chip under tested, based on the current a dynamic evaluation parameter and the target power consumption model in the power consumption evaluation, thereby splitting the chip power consumption analysis process into power consumption modeling and power consumption evaluation parts, so that after modeling is completed, the subsequent power consumption evaluation steps only need to rely on the generated power consumption model, and at the same time, input relevant a dynamic evaluation parameter for multiple power consumption evaluation calculations. Therefore, based on the generated power consumption model, significant data merging and compression are realized, the parameter processing cost is greatly reduced, the efficiency of evaluating the power consumption of the same design chip under different environments and behaviors is improved, the problem of low efficiency in chip power consumption evaluation is effectively solved, and an efficient and accurate chip power consumption evaluation device is realized.

In some embodiments, the parameter module 52 is also used to obtain a static factor information corresponding to a scenario requirement information, and determine the static modeling parameter of the chip under tested based on the static factor information; and/or, the parameter module 52 obtains a dynamic factor information corresponding to the scenario requirement information, and determines the dynamic evaluation parameter of the chip under tested based on the dynamic factor information.

In some embodiments, the modeling module 54 is also used to determine a data template corresponding to the scenario requirement information; the modeling module 54 is used to obtains a model data required by the data template from the intermediate calculation result; the modeling module 54 generates the target power consumption model based on the model data and the data template.

In some embodiments, the target power consumption model includes a detailed model data; wherein the detailed model data at least includes a chip description data and the intermediate calculation result corresponding to the chip description data; and/or, the target power consumption model includes a model metadata; wherein the model metadata at least includes a model description data, and the model description data is used to describe an attribute of the target power consumption model.

In some embodiments, the evaluation module 56 determines a second mapping relationship; wherein the second mapping relationship is used to indicate a correspondence between the dynamic evaluation parameter in the power consumption constraint, the intermediate calculation result of the target power consumption model, and the power consumption evaluation result; the evaluation module 56 obtains power consumption evaluation result based on the dynamic evaluation parameter, the intermediate calculation result, and the second mapping relationship.

In some embodiments, the static modeling parameter includes at least one hierarchical sub-module of the chip under tested, and the intermediate calculation result includes intermediate calculation results corresponding to the hierarchical sub-module.

In some embodiments, each hierarchical sub-module includes multiple component units; the modeling module 54 is also used to: for each component unit, obtain the static modeling parameter corresponding to different power consumption types of the component unit, and the first mapping relationship corresponding to different power consumption types; wherein the same power consumption type corresponds to the same first mapping relationship; the modeling module 54 calculates intermediate calculation results for different power consumption evaluation types of different component units, based on the static modeling parameter corresponding to different power consumption types, and the first mapping relationship corresponding to different power consumption types; the modeling module 54 merges intermediate calculation results of the same power consumption type in the same hierarchy to generate an intermediate calculation result corresponding to the hierarchical sub-module.

In some embodiments, the chip under tested includes multiple component units; the chip power consumption evaluation device further includes a display module; the evaluation module 56 is also used to calculate the sub-power consumption values corresponding to the component units based on the dynamic evaluation parameter and the target power consumption model; the evaluation module 56 obtains the identification information corresponding to the component units, and obtains the power consumption evaluation result based on the identification information and the sub-power consumption values; the display module is used to detect a power consumption query instruction for the component units; the display module searches for the sub-power consumption values in the power consumption evaluation result in response to the detected power consumption query instruction, and determines the corresponding target sub-power consumption values based on the identification information from all the sub-power consumption values; the display module generates power consumption query results based on the target sub-power consumption values, and sends the power consumption query results to the terminal device for display.

In some embodiments, the chip power consumption evaluation device further includes a block module; the block module is used to obtain block information for the chip under tested, and determine at least two block chip areas of the chip under tested based on the block information; the modeling module 54 generates at least two target power consumption models corresponding to the block chip areas based on the static modeling parameter; the evaluation module 56 inputs the dynamic evaluation parameter of each block chip area into the corresponding target power consumption model to obtain a power consumption evaluation result corresponding to the block chip areas.

It should be noted that the above-mentioned various modules can be functional modules or program modules, which can be realized by software or hardware. For modules realized by hardware, the above-mentioned various modules can be located in the same processor; or the above-mentioned various modules can also be combined in any form and located in different processors.

In this embodiment, a chip power consumption evaluation system is provided. FIG. 6 is a structural block diagram of a chip power consumption evaluation system according to an embodiment of the present application. As shown in FIG. 6, the system includes: a main control device 62 and a terminal device 12; the terminal device 12 is used to obtain the static modeling parameter and a dynamic evaluation parameter of the chip under tested, and send the static modeling parameter and the dynamic evaluation parameter to the main control device 62; the main control device 62 is used to perform the steps of the above method embodiments. The main control device 62 can include, but is not limited to, various computers, servers, server clusters, or other hardware devices used to control the chip power consumption simulation evaluation process. Further, the terminal device 12 and the main control device 62 can communicate through a transmission device; in one embodiment, the transmission device can include a Network Interface Controller (NIC), which can be connected to other network devices through a base station to communicate with the Internet; in another embodiment, the transmission device can be a Radio Frequency (RF) module, which is used to communicate with the Internet in a wireless manner.

Through the above embodiments, the main control device 62 first models the power consumption calculation model based on the fixed a static modeling parameter of the chip under tested to generate the target power consumption model as an intermediate form, and then inputs the dynamic evaluation parameter of the chip under tested in the power consumption evaluation, and finally obtains the power consumption evaluation result of the chip under tested based on the dynamic evaluation parameter and the target power consumption model, thereby splitting the chip power consumption analysis process into power consumption modeling and power consumption evaluation parts, so that after modeling is completed, the subsequent power consumption evaluation steps only need to rely on the generated power consumption model, and at the same time, input relevant a dynamic evaluation parameter for multiple power consumption evaluation calculations. Therefore, based on the generated power consumption model, significant data merging and compression are realized, the parameter processing cost is greatly reduced, the efficiency of evaluating the power consumption of the same design chip under different environments and behaviors is improved, the problem of low efficiency in chip power consumption evaluation is effectively solved, and an efficient and accurate chip power consumption evaluation system is realized.

In some embodiments, a computer device is provided, which can be a server device. FIG. 7 is a structural diagram of the interior of a computer device according to an embodiment of the present application. As shown in FIG. 7, the computer device includes a processor, a memory, a network interface, and a database, which are connected through a system bus. The processor of the computer device is used to provide computing and control capabilities. The memory of the computer device includes a non-volatile storage medium and an internal memory. The non-volatile storage medium stores an operating system, a computer program, and a database. The internal memory provides an environment for the operation of the operating system and the computer program in the non-volatile storage medium. The database of the computer device is used to store the target power consumption model. The network interface of the computer device is used to communicate with external terminals through a network. The computer program is executed by the processor to implement a chip power consumption evaluation method.

It should be noted that the structure shown in FIG. 7 is merely a part of the structure related to the solution of the present application, and does not constitute a limitation on the computer device to which the solution of the present application is applied. The specific computer device can include more or fewer components than shown in the figure, or can combine certain components, or can have different component arrangements.

In this embodiment, a computer device is also provided, which includes a memory and a processor, and the memory stores a computer program, the processor is set to run the computer program to execute the steps of the above method embodiments.

Optionally, the above-mentioned computer device may also include a transmission device and an input/output device, wherein the transmission device is connected to the processor, and the input/output device is connected to the processor.

Optionally, in this embodiment, the processor can be set to run the computer program to execute the following steps:

Step S210, determining a static modeling parameter and a dynamic evaluation parameter of a chip under tested; wherein the static modeling parameter is an unvarying chip design parameter in a power consumption constraint of a current power consumption scenario, and the dynamic evaluation parameter is a varying chip design parameter in the power consumption constraint of the current power consumption scenario.

Step S220, calculating intermediate calculation results based on the static modeling parameter and a first mapping relationship, and generating a target power consumption model that stores the intermediate calculation results; wherein the first mapping relationship is used to indicate the correspondence between the static modeling parameter and the intermediate calculation results in the power consumption constraint.

Step S230, obtaining a power consumption evaluation result based on the dynamic evaluation parameter and the target power consumption model.

It should be noted that the specific examples in the above embodiments can refer to the examples described in the above embodiments and preferred embodiments, and will not be repeated here.

In addition, in combination with the above embodiments of the chip power consumption evaluation method, the present application can also provide a storage medium to realize it. The storage medium stores a computer program; when the computer program is executed by the processor, it implements any one of the above chip power consumption evaluation methods.

Those skilled in the art should understand that all or part of the processes in the above method embodiments can be completed by instructing related hardware through a computer program, and the computer program can be stored in a non-volatile computer-readable storage medium. When the computer program is executed, it can include the process of the above method embodiments. The computer program mentioned above can be stored in a non-volatile and/or volatile storage medium. Non-volatile storage media can include Read-Only Memory (ROM), Programmable ROM (PROM), Erasable Programmable ROM (EPROM), Electrically Erasable Programmable ROM (EEPROM), and flash memory. Volatile storage media can include Random Access Memory (RAM) or external high-speed buffers. As an illustration rather than a limitation, RAM is available in many forms, such as Static RAM (SRAM), Dynamic RAM (DRAM), Synchronous DRAM (SDRAM), Double Data Rate SDRAM (DDR SDRAM), Enhanced SDRAM (ESDRAM), Synchronous Link (Synchlink) DRAM (SLDRAM), Rambus Direct RAM (RDRAM), Direct Rambus DRAM (DRDRAM), and Rambus DRAM (RDRAM), etc.

The technical personnel in this field should understand that the various technical features described in the above embodiments can be combined arbitrarily. As long as these technical features do not conflict with each other, they should all be considered within the scope of the description of this specification.

The above-mentioned embodiments only express several implementation modes of the present application. Their description is relatively specific and detailed, but it should not be understood as a limitation on the scope of the patent. It should be pointed out that for those of ordinary skill in the art, several modifications and improvements can be made without departing from the concept of the present application, and these all belong to the protection scope of the present application. Therefore, the protection scope of the present application should be subject to the appended claims.

## Claims

1. A chip power consumption evaluation method, comprising:

   determining a static modeling parameter and a dynamic evaluation parameter of a chip under tested; wherein the static modeling parameter is an unvarying chip design parameter in a power consumption constraint of a current power consumption scenario, and the dynamic evaluation parameter is a varying chip design parameter in the power consumption constraint of the current power consumption scenario;
   calculating an intermediate calculation result based on the static modeling parameter and a first mapping relationship, and generating a target power consumption model that stores the intermediate calculation result; wherein the first mapping relationship is used to indicate a correspondence between the static modeling parameter in the power consumption constraint and the intermediate calculation result;
   obtaining a power consumption evaluation result based on the dynamic evaluation parameter and the target power consumption model.

2. The chip power consumption evaluation method according to claim 1, wherein:

   determining the static modeling parameter of the chip under tested comprises: obtaining a static factor information corresponding to a scenario requirement information, and determining the static modeling parameter of the chip under tested from the static factor information;
   and/or,
   determining the dynamic evaluation parameter of the chip under tested comprises: obtaining a dynamic factor information corresponding to the scenario requirement information, and determining the dynamic evaluation parameter of the chip under tested from the dynamic factor information.

3. The chip power consumption evaluation method according to claim **1,** wherein generating the target power consumption model that stores the intermediate calculation result comprises:

   determining a data template corresponding to the scenario requirement information;
   obtaining a model data required by the data template from the intermediate calculation result;
   generating the target power consumption model based on the model data and the data template.

4. The chip power consumption evaluation method according to claim 1, wherein the target power consumption model comprises a detailed model data; wherein the detailed model data at least comprises a chip description data and the intermediate calculation result corresponding to the chip description data;
   and/or,
   the target power consumption model comprises a model metadata; wherein the model metadata at least comprises a model description data, and the model description data is used to describe an attribute of the target power consumption model.

5. The chip power consumption evaluation method according to claim **1,** wherein obtaining the power consumption evaluation result based on the dynamic evaluation parameter and the target power consumption model comprises:

   determining a second mapping relationship; wherein the second mapping relationship is used to indicate a correspondence between the dynamic evaluation parameter in the power consumption constraint, the intermediate calculation result of the target power consumption model, and the power consumption evaluation result;
   obtaining the power consumption evaluation result based on the dynamic evaluation parameter, the intermediate calculation result, and the second mapping relationship.

6. The chip power consumption evaluation method according to claim 1, wherein the static modeling parameter comprises at least one hierarchical sub-module of the chip under tested, and the intermediate calculation result of the target power consumption model comprise an intermediate calculation result corresponding to the hierarchical sub-module.

7. The chip power consumption evaluation method according to claim **6,** wherein each hierarchical sub-module comprises multiple component units, and calculating the intermediate calculation result based on the static modeling parameter and the first mapping relationship comprises:

   for each component unit, obtaining a static modeling parameter corresponding to different power consumption types of the component unit, and first mapping relationships corresponding to different power consumption types; wherein a same power consumption type corresponds to a same first mapping relationship;
   calculating intermediate calculation results for different power consumption evaluation types of different component units, based on the static modeling parameter corresponding to different power consumption types, and the first mapping relationship corresponding to different power consumption types;
   merging intermediate calculation results of the same power consumption type in a same hierarchy to generate the intermediate calculation result corresponding to the hierarchical sub-module.

8. The chip power consumption evaluation method according to any one of claims **1** to **7,** further comprising:

   obtaining a block information for the chip under tested, determining at least two block chip areas of the chip under tested based on the block information;
   calculating the intermediate calculation result based on the static modeling parameter and the first mapping relationship, and generating the target power consumption model that stores the intermediate calculation result, comprising:
   generating at least two target power consumption models corresponding to the block chip areas based on the static modeling parameter, wherein each target power consumption model is used with the dynamic evaluation parameter of a corresponding block chip area, to obtain power consumption evaluation result corresponding to the block chip areas.

9. A chip power consumption evaluation method, comprising:

   in response to a user's power consumption evaluation request, obtaining a target power consumption model;
   wherein the target power consumption model is used to store an intermediate calculation result calculated based on a static modeling parameter of a chip under tested and a first mapping relationship, wherein the static modeling parameter is an unvarying chip design parameter in a power consumption constraint of a current power consumption scenario, and the first mapping relationship is used to indicate a correspondence between the static modeling parameter in the power consumption constraint and the intermediate calculation result;

obtaining a dynamic evaluation parameter; wherein the dynamic evaluation parameter is a varying chip design parameter in the power consumption constraint of the current power consumption scenario;

obtaining a power consumption evaluation result based on the dynamic evaluation parameter and the target power consumption model.

10. The chip power consumption evaluation method according to claim **9,** wherein obtaining the power consumption evaluation result based on the dynamic evaluation parameter and the target power consumption model comprises:

determining a second mapping relationship; wherein the second mapping relationship is used to indicate a correspondence between the dynamic evaluation parameter in the power consumption constraint, the intermediate calculation result of the target power consumption model, and the power consumption evaluation result;

obtaining the power consumption evaluation result based on the dynamic evaluation parameter, the intermediate calculation result, and the second mapping relationship.

11. A power consumption model generation method, comprising:

determining a static modeling parameter of a chip under tested; wherein the static modeling parameter is an unvarying chip design parameter in a power consumption constraint of a current power consumption scenario;

calculating intermediate calculation result based on the static modeling parameter and a first mapping relationship, and generating a target power consumption model that stores the intermediate calculation result, to obtain a power consumption evaluation result of the chip under tested; wherein the first mapping relationship is used to indicate a correspondence between the static modeling parameter in the power consumption constraint and the intermediate calculation result; the power consumption evaluation result are generated based on a dynamic evaluation parameter and the target power consumption model, and the dynamic evaluation parameter is a varying chip design parameter in the power consumption constraint of the current power consumption scenario.

12. The power consumption model generation method according to claim **11,** wherein the target power consumption model comprises a detailed model data; wherein the detailed model data at least comprises a chip description data and the intermediate calculation result corresponding to the chip description data;

and/or,

the target power consumption model comprises a model metadata; wherein the model metadata at least comprises a model description data, and the model description data is used to describe an attributes of the target power consumption model.

13. A computer device, comprising a memory and a processor, the memory storing a computer program, wherein when the processor executes the computer program, it implements the chip power consumption evaluation method according to any one of claims **1** to **10,** or the power consumption model generation method according to any one of claims **11** or **12.**

FIG. 1

determining a static modeling parameter and a dynamic evaluation parameter of a chip under tested; wherein the static modeling parameter is an unvarying chip design parameter in a power consumption constraint of a current power consumption scenario, and the dynamic evaluation parameter is a varying chip design parameter in the power consumption constraint of the current power consumption scenario — S210

calculating an intermediate calculation result based on the static modeling parameter and a first mapping relationship, and generating a target power consumption model that stores the intermediate calculation result; wherein the first mapping relationship is used to indicate a correspondence between the static modeling parameter in the power consumption constraints and the intermediate calculation result — S220

obtaining a power consumption evaluation result based on the dynamic evaluation parameter and the target power consumption model — S230

FIG. 2

in response to a user's power consumption evaluation request, obtaining a target power consumption model; wherein the target power consumption model stores an intermediate calculation result, the intermediate calculation result is calculated based on a static modeling parameter of a chip under tested and a first mapping relationship, the first mapping relationship is used to indicate a correspondence between the static modeling parameter in a power consumption constraint and the intermediate calculation result ⟶ S310

obtaining a dynamic evaluation parameter; wherein the static modeling parameter is a unvarying chip design parameter in the power consumption constraint of a current power consumption scenario, and the dynamic evaluation parameter is a varying chip design parameter in the power consumption constraint of the current power consumption scenario ⟶ S320

obtaining a power consumption evaluation result of the chip under tested based on the target power consumption model and the dynamic evaluation parameter ⟶ S330

FIG. 3

input for modeling ⟶ S401

power consumption modeling ⟶ S402

evaluation input ⟶ S404

power consumption model ⟶ S403

power consumption evaluation ⟶ S405

power consumption evaluation result ⟶ S406

FIG. 4

| parameter module | — | modeling module | — | evaluation module |

52　　　　　　　　　54　　　　　　　　　56

## FIG. 5

| main control device | — | terminal device |

62　　　　　　　　　12

## FIG. 6

processor

system bus

operating system

internal memory

computer program

network interface

database

non-volatile storage medium

computer equipment

## FIG. 7

## INTERNATIONAL SEARCH REPORT

| International application No. |
|---|
| **PCT/CN2024/095911** |

**A. CLASSIFICATION OF SUBJECT MATTER**

G06F 30/398(2020.01)i; G06F 119/06(2020.01)i

According to International Patent Classification (IPC) or to both national classification and IPC

**B. FIELDS SEARCHED**

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE: 芯片, 功耗, 模型, 静态, 动态, 评估, 映射, chip, power, model, static, dynamic, evaluation, mapping

**C. DOCUMENTS CONSIDERED TO BE RELEVANT**

| Category* | Citation of document, with indication, where appropriate, of the relevant passages | Relevant to claim No. |
|---|---|---|
| PX | CN 116502596 A (HANGZHOU XINGXIN TECHNOLOGY CO., LTD.) 28 July 2023 (2023-07-28) description, paragraphs [0004]-[0105], and claims 1-13 | 1-13 |
| X | CN 102147822 A (SHANGHAI HIGH PERFORMANCE DESIGN CENTER) 10 August 2011 (2011-08-10) description, paragraphs [0004]-[0082] | 1-13 |
| A | CN 114791870 A (GUANGDONG OPPO MOBILE COMMUNICATIONS CO., LTD.) 26 July 2022 (2022-07-26) entire document | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 July 2024** | **06 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/095911**

| Patent document cited in search report | | | Publication date (day/month/year) | Patent family member(s) | | | Publication date (day/month/year) |
|---|---|---|---|---|---|---|---|
| CN | 116502596 | A | 28 July 2023 | CN | 116502596 | B | 31 October 2023 |
| CN | 102147822 | A | 10 August 2011 | None | | | |
| CN | 114791870 | A | 26 July 2022 | None | | | |

Form PCT/ISA/210 (patent family annex) (July 2022)

**REFERENCES CITED IN THE DESCRIPTION**

**Patent documents cited in the description**

- CN 202310773235